# EUROPÄISCHE PATENTSCHRIFT

(11) **EP 0 802 036 B1**
(45) Veröffentlichungstag und Bekanntmachung des Hinweises auf die Patenterteilung: **24.07.2002**
(21) Anmeldenummer: 97105574.4
(22) Anmeldetag: 04.04.1997
(51) Int. Cl.: B29C 65/20, B23Q 1/01

(54) **Vorrichtung zum Stumpfschweissen von thermoplastischen Kunststoffrohren**
Apparatus for butt-welding of thermoplastic pipes
Appareil pour le soudage bout à bout de tubes en matières thermoplastiques

(30) Priorität: 18.04.1996 DE 19615204; 18.04.1996 DE 29607009 U
(43) Veröffentlichungstag der Anmeldung: 22.10.1997
(73) Patentinhaber: Rothenberger Werkzeuge Aktiengesellschaft, 65779 Kelkheim / Ts. (DE)
(72) Erfinder: Basler, Michael, 37235 Hessisch-Lichtenau (DE)
(74) Vertreter: Zapfe, Hans, Dipl.-Ing.

(56) Entgegenhaltungen:
- EP-A- 0 027 225
- EP-A- 0 602 960
- FR-A- 2 548 069
- DATABASE WPI Section Ch, Week 8807 Derwent Publications Ltd., London, GB; Class A35, AN 88-048349 XP002051113 & SU 1 321 605 A (GLAVZAPSTROI ORGTEK) , 7.Juli 1987
- DATABASE WPI Section Ch, Week 8704 Derwent Publications Ltd., London, GB; Class A35, AN 87-028424 XP002051114 & SU 1 235 754 A (SKB-MOSSTROI) , 7.Juni 1986

## Beschreibung

Die Erfindung betrifft eine Vorrichtung zum Stumpfschweißen von thermoplastischen Kunststoffrohren nach dem Oberbegriff des Patentanspruchs 1.

Derartige Vorrichtungen werden dazu benötigt, Leitungsabschnitte aus thermoplastischen Kunststoffrohren, die zum Transport von fluiden Medien dienen, dicht und mechanisch hoch belastbar miteinander zu verschweißen. An die Eigenschaften derartiger Schweißverbindungen werden aufgrund vorhandener Normen extrem hohe Anforderungen gestellt, beispielsweise muß die Ausbildung von deutlich sichtbaren Schweißwülsten erkennbar sein. Bei dem Planhobel handelt es sich um mindestens eine drehbare Scheibe, die mit einem Ausschnitt und einem Hobelmesser versehen ist. Beim Planhobeln wird der Planhobel zwischen die beiden Rohrhalter eingeschwenkt, wobei die Hobelachse mit den Achsen der Rohrenden zusammenfällt. Die zunächst nur grob vorgeschnittenen Rohrenden werden alsdann gegen den Planhobel verschoben, so daß zwei ringförmige Schnittflächen entstehen, die exakt radial verlaufen. Der Abstand zwischen den Rohrenden wird alsdann wieder vergrößert und der Planhobel aus seiner Arbeitsstellung in eine Ruhestellung herausgeschwenkt, abgeschaltet und seitlich auf einer entsprechenden Linearführung verschoben. Auf der gleichen Linearführung befindet sich ein plattenförmiges Heizelement, das entsprechend vorgeheizt ist und an die Stelle des Planhobels in den Abstand zwischen den Rohrenden hineingeschwenkt wird. Alsdann werden die beiden Rohrenden unter flächiger Berührung relativ gegen das Heizelement verschoben und - vorzugsweise mittels einer Programmsteuerung - auf die erforderliche Schweißtemperatur gebracht. Danach wird das Heizelement wieder aus seiner Arbeitsstellung in eine Ruhestellung zurückgeschwenkt, worauf die plastifizierten Rohrenden mit entsprechendem Kraftaufwand gegeneinander verschoben werden, so daß sie absolut dicht und mechanisch hoch belastbar mit einander verbunden werden. Sowohl der Planhobel als auch das Heizelement sind auf ihrer gemeinsamen Linearführung frei verschiebbar, so daß sie sich stets genau mittig zwischen den beiden Rohrenden einstellen können.

Durch die EP 0 027 225 A1 ist eine Stumpfschweißmaschine nach dem Oberbegriff des Patentanspruchs 1 bekannt, die üblicherweise auf einem Werktisch abgestellt wird, für die jedoch kein Gestell zum sicheren Transport angegeben ist. Derartige Maschinen sind jedoch aus technischen Gründen in horizontaler Richtung sehr sperrig ausgebildet, weil sowohl der Planhobel als auch das Heizelement außerhalb der Betriebsstellungen sehr weit abstehen und beim Transport beschädigt werden können. Außerdem ist eine solche Vorrichtung, wenn sie mit einem Arbeitstisch transportiert werden muß, sehr stark kopflastig. Man hat sich daher so beholfen, daß man die bekannte Maschine von der Tischplatte des Arbeitstisches abgehoben und auf einer darunter befindlichen Abstellplatte abgestellt hat. Dies ist wegen des Gewichts der Maschine sehr anstrengend, und außerdem wird dadurch die Sperrigkeit in horizontaler Richtung nicht beseitigt.

Der Erfindung liegt daher die Aufgabe zugrunde, eine Stumpfschweißvorrichung der eingangs beschriebenen Gattung anzugeben, bei der das Verbringen der Maschine mit ihren Aufbauten weniger Kraft erfordert und bei der die Aufbauten des Maschinenbettes beim Transport zuverlässig gegen Beschädigungen durch Anstoßen an andere Gegenstände und/oder durch Umkippen der gesamten Vorrichtung geschützt werden.

Die Lösung der gestellten Aufgabe erfolgt bei der eingangs angegebenen Vorrichtung erfindungsgemäß durch die Merkmale im Kennzeichen des Patentanspruchs 1.

Die Erfindung befaßt sich daher mit dem Problem, das Verbringen des Maschinenbetts mit seinen Aufbauten in eine Ruhestellung weniger kraftaufwendig zu gestalten und die Aufbauten des Maschinenbetts beim Transport zuverlässig gegen Beschädigungen durch Anstoßen an andere Gegenstände und/oder durch Umkippen der gesamten Vorrichtung zu schützen. Dieses Problem wird durch die Erfindung gelöst.

Hierbei muß man sich vor Augen halten, daß durch die Vorwärtsneigung der Arbeitsebene auch Teile bzw. Aufbauten der Stumpfschweißmaschine, insbesondere Bedienungselemente, vorverlagert werden und damit zwar einerseits die Arbeit erleichtem, andererseits aber außerhalb des Arbeitseinsatzes und beim notwendigen Transport der Stumpfschweißmaschine stärker gefährdet sind.

Durch die erfindungsgemäße Lösung wird beim Hinunterschwenken des Maschinenbetts um die betreffende Achse der Schwerpunkt der gesamten Anordnung erheblich nach unten verlagert, so daß der Schutz gegen ein Umkippen der Vorrichtung erheblich vergrößert wird. Dieser Vorgang erfordert einen nur geringen Kraftaufwand, da ein großer Teil des Gewichts ständig von der Achse getragen wird. Weiterhin dient das Gestell gewissermaßen als Schutz gegen ein Anstoßen vorspringender Teile an fremde Gegenstände, wenn die Vorrichtung an einen anderen Einsatzort verbracht wird. Ferner wird eine maximale Absenkung des Schwerpunktes erreicht, desgleichen ein vollständiges Einschwenken des Maschinenbetts mit seinen Aufbauten zwischen die vier Stützen des Gestells.

Es ist dabei wiederum von besonderem Vorteil, wenn von der Achse zwei radiale Tragarme abstehen, an denen das Maschinenbett befestigt ist und die mit je einem federbelasteten Riegel versehen sind, mit dem die Tragarme wahlweise mit waagrechten Streben und mit den hinteren Stützen verbindbar sind.

Die beiden Tragarme, die erforderlichenfalls an ihren freien Enden durch eine Querstrebe miteinander verbunden sind, dienen zur Befestigung des Maschinenbetts, und die federbelasteten Riegel dienen zur Sicherung der gesamten Vorrichtung sowohl in der Arbeitsstellung als auch in der Ruhe-und/oder Transportstellung.

Weitere vorteilhafte Ausgestaltungen des Gegenstandes der Erfindung sind in den übrigen Unteransprüchen beschrieben.

Ein Ausführungsbeispiel des Erfindungsgegenstandes wird nachfolgend anhand der Figuren 1 bis 12 näher erläutert.

Es zeigen:
- Figur 1: eine Vorderansicht der vollständigen Vorrichtung jedoch ohne ein Gestell,
- Figur 2: einen Vertikalschnitt durch den Gegenstand von Figur 1 entlang der Linie II-II,
- Figur 3: eine Seitenansicht in Richtung des Pfeils III in Figur 1, jedoch ohne Heizvorrichtung und ohne Planhobel,
- Figur 4: eine Vorderansicht einer vollständigen Vorrichtung mit einem Gestell in der Arbeitsstellung,
- Figur 5: eine Seitenansicht des Gegenstandes nach Figur 4 in Richtung des Pfeils V,
- Figur 6: eine Vorderansicht der vollständigen Vorrichtung in der Ruhe- bzw. Transportstellung, allerdings ohne die Aufbauten, und
- Figur 7: eine Seitenansicht des Gegenstandes nach Figur 6 in Richtung des Pfeils VII allerdings mit Aufbauten.

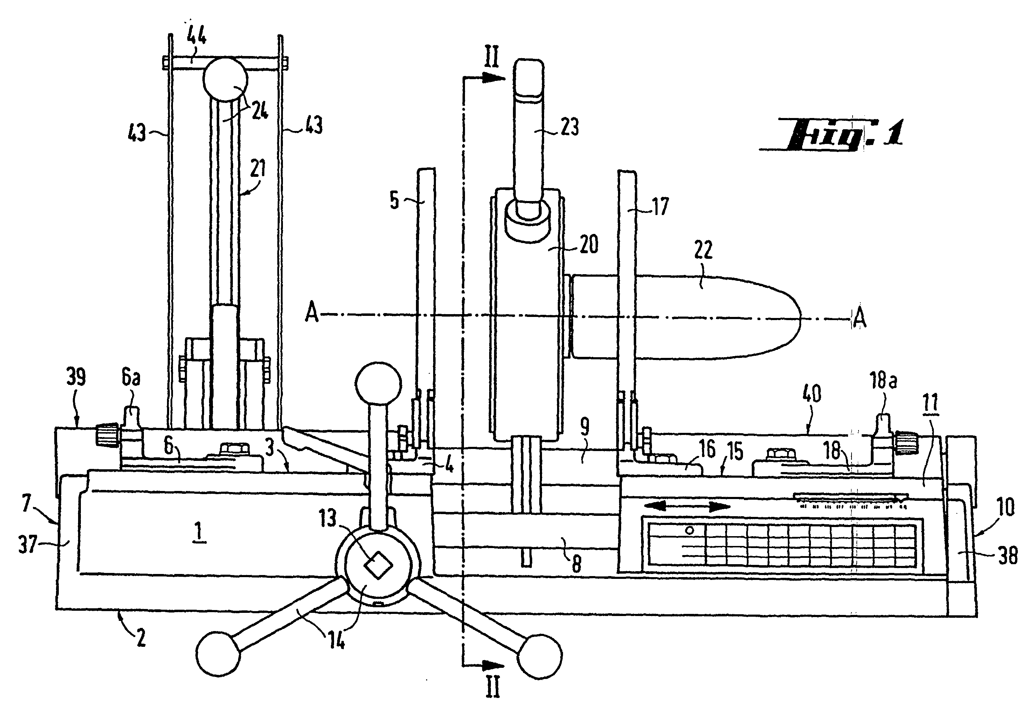

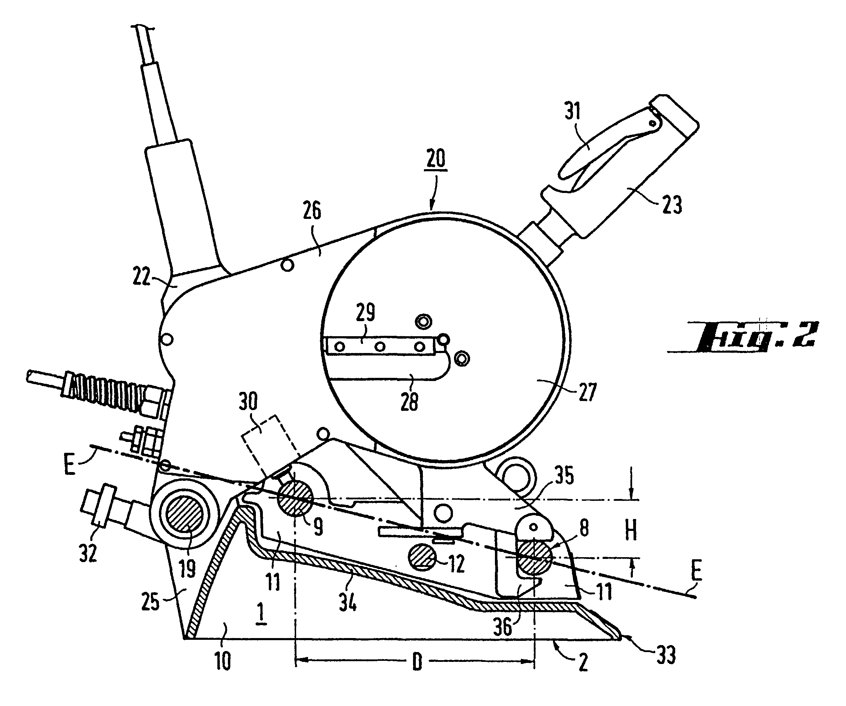

In Figur 1 ist ein Maschinenbett 1 dargestellt, das eine Aufstellffäche 2 für die Aufstellung auf einem Arbeitstisch oder dergleichen besitzt. Das Maschinenbett 1 besitzt eine Aufspannfläche 3, auf der mittels eines ersten Winkelstücks 4 ein ortsfester aber verstellbarer Rohrhalter 5 befestigt ist. Ein zweites Winkelstück 6 kann zur Befestigung eines weiteren, hier nicht dargestellten, Rohrhalters dienen. Das Maschinenbett 1 besitzt weiterhin eine linke Seitenwand 7. im Maschinenbett 1 sind die linken Enden zweier als Rundstangen ausgebildeter Linearführungen befestigt, und zwar einer vorderen ersten Linearführung 8 und einer zweiten Linearführung 9, die in der Höhe gestaffelt angeordnet sind und deren rechte Enden in der rechten Seitenwand 10 des Maschinenbetts 1 befestigt sind. Auf den Linearführungen 8 und 9 ist in einer entsprechenden Ausnehmung des Maschinenbetts 1 ein Schlitten 11 verschiebbar, und zwar mittels einer am Schlitten 11 befestigten Zahnstange 12 (Figur 2), in die von unten her ein hier nicht gezeigtes Ritzel eingreift, das am Ende einer Welle 13 befestigt ist, die von einem Drehkreuz 14 von Hand angetrieben wird.

Die Oberseite des Schlittens 11 wird durch eine weitere Aufspannfläche 15 gebildet, auf der mittels eines weiteren Winkelstücks 16 ein zweiter Rohrhalter 17 verstellbar befestigt ist. Mittels eines wiederum weiteren Winkelstücks 18 ist auf dem Schlitten 11 ein zusätzlicher, hier gleichfalls nicht dargestellter Rohrhalter befestigbar. Die Aufspannflächen 3 und 15 liegen in einer gemeinsamen, waagrechten Ebene. Die Rohrhalter 5 und 17 sind in Bezug auf eine gemeinsame Achse A-A konzentrisch ausgebildet, wobei diese Achse auch die Lage der Achsen der miteinander zu verschweißenden Rohrenden definiert. Die Rohrhalter 5 und 17 sind als Spannringe ausgebildet und auf der einer Gelenkverbindung 41 diametral gegenüberüberliegenden Seite durch eine Spannspindel 42 fest gegen das zu bearbeitende Rohr verspannbar.

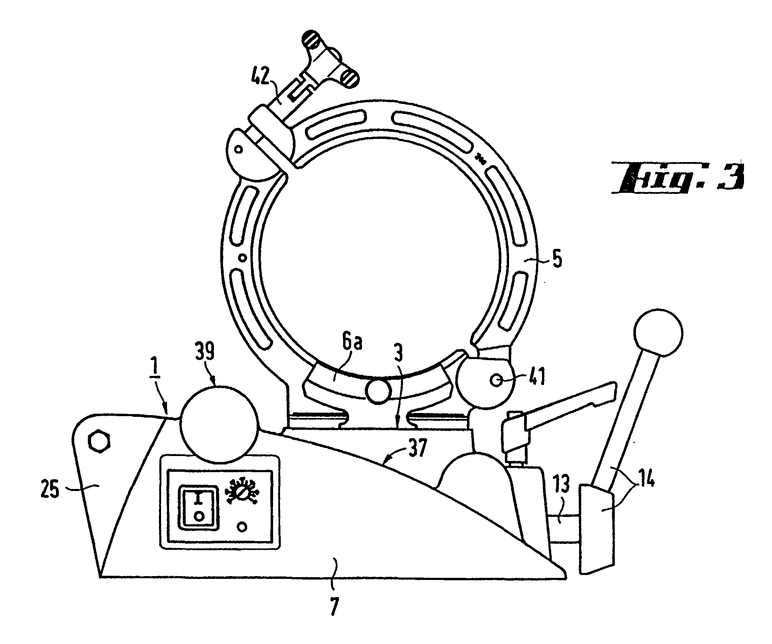

Wie aus Figur 3 hervorgeht, ist das Winkelstück 6 auf seinem nach oben abstehenden Schenkel 6a entsprechend dem Rohrdurchmesser als Teil-Zylinderfläche ausgebildet. Entsprechendes gilt auch für den Schenkel 18a des Winkelstücks 18. Dadurch ist es möglich, die Schenkel 6a und 18a auch ohne ringförmige Rohrhalter 5 und 17 als reine Auflagekörper für die zu verschweißenden Rohre zu verwenden.

Auf einer dritten, hinteren Linearführung 19 (Figur 2) sind - parallel zu den Linearführungen 8 und 9 verschiebbar - ein Planhobel 20 und ein plattenförmiges Heizelement 21 verschwenkbar angeordnet. Der Planhobel 20 wird durch eine Handbohrmaschine 22 angetrieben, die mit großem Abstand jenseits der Achse A-A lösbar mit dem Planhobel 20 verbunden ist. Der Planhobel 20 ist infolgedessen ohne Behinderung durch den Rohrhalter 17 mit seiner Rotationsachse konzentrisch zur Achse A-A mittels eines Handhebels 23 in den Abstand zwischen den Rohrhaltern 5 und 17 einschwenkbar. Das Heizelement 21 ist in der Ruhestellung auf beiden Seiten von einem Berührungsschutz 43 umgeben, der aus zwei Blechscheiben besteht, die durch einen Distanzbolzen 44 verbunden und schwenkbar und verschiebbar auf der dritten Linearführung 19 gelagert sind.

Nachdem das Planhobeln der beiden Rohrenden durch den Planhobel 20 beendet ist, wird dieser in seine Ruhestellung um die Linearführung 19 zurückgeschwenkt und nach rechts verschoben. An die Stelle des Planhobels 20 tritt jetzt das vorgeheizte Heizelement 21, das mittels eines Handhebels 24 gleichfalls in den Zwischenraum zwischen den Rohrhaltern 5 und 17 eingeschwenkt wird. Die Reihenfolge der Arbeitsschritte und der Auswirkungen ist bereits einleitend angegeben worden.

Aus den Figuren 2 und 3 ist zu entnehmen, daß sich auf der Rückseite des Maschinenbetts 1 zwei Lagerböcke 25 befinden, zwischen denen die dritte Linearführung 19 eingespannt ist. Figur 2 zeigt den Planhobel 20 in seiner Arbeitsstellung. Er besitzt innerhalb eines Gehäuses 26 zwei durch die Handbohrmaschine 22 angetriebene Scheiben 27, von denen nur die eine sichtbar ist. Die Scheibe 27 besitzt eine Aussparung 28 für den Spänedurchtritt und ein Messer 29. Im Gehäuse 26 befindet sich ein elektrischer Schalter 30, dessen Taststift sich in der Arbeitsstellung auf der Linearführung 9 abstützt und dadurch den Schalter 30 schließt. Dieser Schalter liegt in Reihe mit einem weiteren Schalter, der sich im Handhebel 23 befindet und mittels eines Hebels 31 geschlossen werden kann. Durch die Reihenschaltung der beiden Schalter wird der Stromkreis geschlossen, so daß jegliche Unfallgefahr ausgeschlossen ist, da der Planhobel 20 außerhalb seiner Arbeitsstellung nicht eingeschaltet werden kann. Ein Anschlag 32, der sich an die Rückseite des Maschinenbetts 1 anlegt, verhindert das allzu weite Zurückschwenken des Planhobels 20.

Es ist Figur 2 insbesondere zu entnehmen, in welchem Maße die Linearführungen 8 und 9, die einen Abstand D aufweisen, hintereinander in der Höhe gestaffelt angeordnet sind, wobei die Höhendifferenz durch das Maß H definiert wird. Diese Höhendifferenz kann beispielhaft zwischen 10 und 100 mm, bei größeren Maschinen auch darüber liegen.

Die Achsen der Linearführungen 8 und 9 definieren eine virtuelle Arbeitsebene E-E, die zur Vorderseite 33 des Maschinenbetts 1 hin abfallend verläuft. Dem Verlauf der Arbeitsebene E-E folgt im wesentlichen die Oberseite des Maschinenbetts 1, das unterhalb der Linearführungen 8 und 9 und der Bewegungsbahn des Schlittens 11 eine gegenüber den Seitenwänden 7 und 10 abgesenkte, zur Vorderseite 33 hin abfallende Deckenwand 34 aufweist. Es ist zu erkennen, daß unterhalb des Schlittens 11 das Maschinenbett 1, das als schalenförmiges Gußteil ausgeführt ist, eine ganz besonders geringe Höhe aufweist.

Das Gehäuse 26 des Planhobels 20 besitzt weiterhin einen Ausleger 35, der sich von oben auf der vorderen Linearführung 8 abstützt und diese mittels eines Hakens 36 untergreift, so daß die oszillierenden Reaktionskräfte des Planhobels 20 abgefangen werden.

Wie aus Figur 3 hervorgeht, besitzt nicht nur die Deckenwand 34 (Figur 2) einen zur Vorderseite hin fallenden Verlauf. Vielmehr besitzen auch die Seitenwände 7 und 10 Oberflächen 37 und 38, die zur Bedienungsseite hin abfallend verlaufen. Wie erkennbar ist, sind die abfallenden Oberflächen 37 und 38 nach oben hin gewölbt ausgebildet.

Wie wiederum aus den Figuren 1 und 3 hervorgeht, sind das Maschinenbett 1 und der Schlitten 11 im Bereich der zweiten oberen Linearführung 9 mit nach oben ragenden Wandungsteilen 39 und 40 versehen, die etwa halbzylindrisch ausgebildet sind und in denen die zweite Linearführung 9 gelagert ist. Auch dadurch wird erreicht, daß trotz einer relativ hohen Lage der zweiten Linearführung 9 die Vorderseite des Maschinenbetts 1 ganz besonders niedrig ausgebildet ist, und auch die Aufspannflächen 3 und 15 sind noch einmal deutlich gegenüber den Wandungsteilen 39 und 40 nach unten hin abgesetzt.

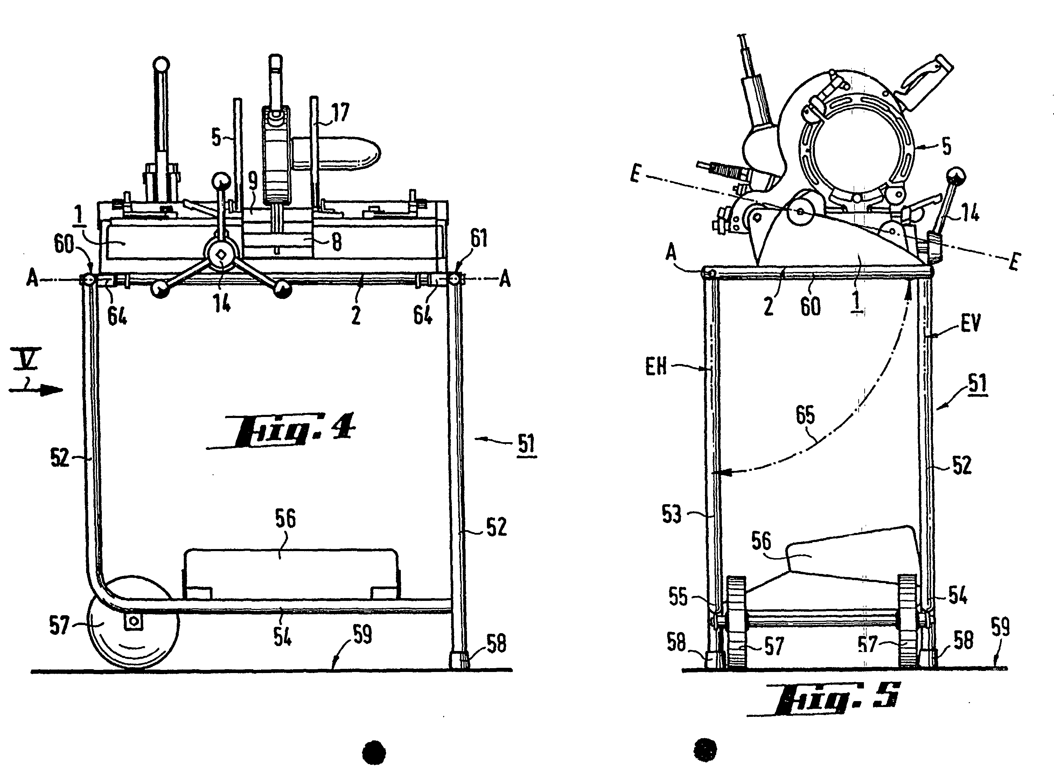

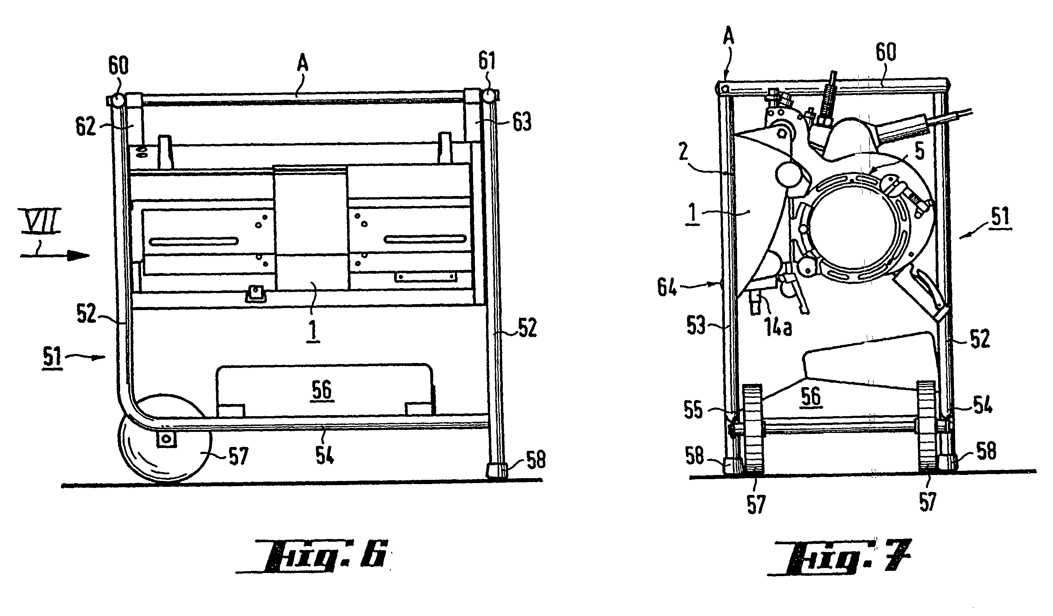

In den Figuren 4 und 5 ist ein Gestell 51 dargestellt, das aus zwei senkrechten vorderen Stützen 52 und zwei hinteren Stützen 53 besteht, die durch Rohre gebildet werden. Die vorderen Stützen 52 definieren eine vordere Hauptebene EV, und die beiden hinteren Stützen 53 definieren eine hintere Hauptebene EH. Die vorderen Stützen 52 sind in ihrem unteren Bereich durch eine waagrechte Strebe 54 miteinander verbunden, und die beiden hinteren Stützen 53 sind in ihrem unteren Bereich durch eine waagrechte Strebe 55 miteinander verbunden. Die betreffenden Teile werden durch ein rechtwinklig mit großem Biegeradius abgebogenes Rohr gebildet. Auf den Streben 54 und 55 ist eine Ablagevorrichtung 56 für Werkzeuge oder dergleichen angeordnet, und diese Ablagevorrichtung 56 verbindet die beiden Streben 54 und 55 verwindungssteif miteinander.

Auf seiner einen Seite (in Figur 4 links) ist das Gestell 51 mit Fahrrollen 57 versehen, und an seiner anderen Seite (in Figur 4 rechts) ist das Gestell 51 mit Aufstellfüßen 58 versehen. Durch Anheben der Aufstellfüße 58, die mit einem Gleitschutz versehen sind, läßt sich die gesamte Vorrichtung mittels der Fahrrollen 57 leicht transportieren; nach dem Absetzen der Aufstellfüße auf dem Boden 59 ist die Vorrichtung ausreichend zuverlässig gegen ein Verschieben geschützt.

An den oberen Enden der Stützen 53 und 54 sind diese durch je eine obere Strebe 60 bzw. 61 miteinander verbunden, die sich von vorn nach hinten erstrecken.

Im Bereich der oberen Enden der hinteren Stützen 53 bzw. im Bereich der hinteren Enden der oberen Streben 60 und 61 befinden sich Befestigungsstellen für die Achse A bzw. A-A, an deren Enden zwei radiale Tragarme 62 und 63 befestigt bzw. gelagert sind. Diese Tragarme 62 und 63 sind nur in Figur 6 deutlich zu sehen. An den vorderen Enden dieser Tragarme 62 und 63 befinden sich - in entgegengesetzten Stellungen - federbelastete Riegel 64, mit denen die Tragarme 62 und 63 wahlweise mit den oberen Streben 60, 61 und den hinteren Stützen 53 verbindbar sind. Der Schwenkwinkel dieser Riegel 64 ist in Figur 5 durch einen strichpunktierten Kreisbogen 65 angedeutet.

An bzw. auf den Tragarmen 62 und 63 ist das Maschinenbett 1 des Gegenstandes nach den Figuren 1 bis 3 befestigt. Während in den Figuren 4 und 5 die Vorrichtung in Betriebsbereitschaft gezeigt ist, befindet sich die Vorrichtung in den Figuren 6 und 7 in der Ruhe- bzw. Transportstellung. Es ist insbesondere durch Vergleich der Figuren 5 und 7 erkennbar, daß durch die Absenkung des Maschinenbetts 1 um die Achse A bzw. A-A der Schwerpunkt der Vorrichtung mit sämtlichen Aufbauten um ein großes Maß nach unten verlagert worden ist, und daß praktisch sämtliche vorspringenden starren Teile in dem quaderförmigen Raum zwischen den vier senkrechten Stützen 52 und 53 untergebracht sind. Das Drehkreuz 14 ist bei der Darstellung in Figur 12 von seiner Welle 14a abgenommen.

## Patentansprüche

1. Vorrichtung zum Stumpfschweißen von thermoplastischen Kunststoffrohren, insbesondere als Tischgerät für Rohrdurchmesser bis 250 mm, mit einem Maschinenbett (1) mit einer Aufstellfläche (2) und mit einer ersten Aufspannfläche (3) für mindestens einen Rohrhalter (5) und mit einer ersten, vorderen Linearführung (8) und einer dahinter angeordneten zweiten Linearführung (9) für einen Schlitten (11), der eine zweite Aufspannfläche (15) für mindestens einen weiteren Rohrhalter (17) aufweist, wobei durch den Schlitten (11) mindestens zwei koaxiale Rohrhalter (5, 17) gegeneinander verschiebbar sind, mit einem Planhobel (20) für die Rohrenden, mit einem gegen den Planhobel (20) austauschbaren Heizelement (21) für die Plastifizierung der Rohrenden und mit einer dritten Linearführung (19) für die ständige Lagerung, Querverschiebung und Schwenkbewegung von Planhobel (20) und Heizelement (21), wobei die zweite Linearführung (9) einen größeren Abstand von der Aufstellfläche (2) des Maschinenbetts (1) aufweist als die erste, vordere Linearführung (8), **dadurch gekennzeichnet,** das Maschinenbett (1) um eine waagrechte Achse (A-A) schwenkbar an einem Gestell (51) gelagert und unter eine Arbeitsebene (E-E) absenkbar ist, die in Betriebsstellung durch die beiden Linearführungen (8, 9) bestimmt ist und daß das Gestell (51) je zwei vordere Stützen (52) und je zwei hintere Stützen (53) besitzt, die in je einer vorderen und einer hinteren Hauptebene (EV, EH) liegen, die parallel zu den Verschieberichtungen der Rohrhalter (5, 17) verlaufen, und daß die Achse (A-A) zumindest im wesentlichen in der Hauptebene (EH) der hinteren Stützen (53) angeordnet ist.

2. Vorrichtung nach Anspruch 1, **dadurch gekennzeichnet, daß** von der Achse (A-A) zwei radiale Tragarme (62, 63) abstehen, an denen das Maschinenbett (1) befestigt ist, und die mit je einem federbelasteten Riegel (64) versehen sind, mit dem die Tragarme (62, 63) wahlweise mit oberen Streben (60, 61) des Gestells (51) und mit den hinteren Stützen (53) verbindbar sind.

3. Vorrichtung nach Anspruch 1, **dadurch gekennzeichnet, daß** das Gestell (51) an seiner einen Seite mit Fahrrrollen (57) und an seiner anderen Seite mit Aufstellfüßen (58) versehen ist.

4. Vorrichtung nach Anspruch 1, **dadurch gekennzeichnet, daß** das Gestell (51) in seinem unteren Bereich zwei waagrechte Streben (53, 54) besitzt, auf denen eine die Streben verbindende Ablagevorrichtung (56) angeordnet ist.

5. Vorrichtung nach Anspruch 1, **dadurch gekennzeichnet, daß** die Höhendifferenz "H" zwischen der ersten Linearführung (8) und der zweiten Linearführung (9) zwischen 10 und 100 mm beträgt.

6. Vorrichtung nach Anspruch 1, **dadurch gekennzeichnet, daß** die dritte Linearführung (19) für den Planhobel (20) und das Heizelement (21) einen kleineren Abstand von der Aufstellfläche (2) aufweist als die zweite Linearführung (9) für die Rohrhalter (5, 17).

7. Vorrichtung nach Anspruch 1, **dadurch gekennzeichnet, daß** das Maschinenbett (1) Oberflächen (37, 38) aufweist, die zur Bedienungsseite hin abfallend verlaufen.

8. Vorrichtung nach Anspruch 7, **dadurch gekennzeichnet, daß** die abfallenden Oberflächen (37, 38) nach oben hin gewölbt ausgebildet sind.

9. Vorrichtung nach Anspruch 1, **dadurch gekennzeichnet, daß** das Maschinenbett (1) und der Schlitten (11) im Bereich der zweiten Linearführung (9) mit nach oben ragenden Wandungsteilen (39, 40) versehen sind, in denen die zweite Linearführung (9), ausgebildet als Führungsstange, gelagert ist.

10. Vorrichtung nach Anspruch 1, **dadurch gekennzeichnet, daß** das Maschinenbett (1) unterhalb der Linearführungen (8, 9) und der Bewegungsbahn des Schlittens (11) eine gegenüber den Seitenwänden (7, 10) abgesenkte, zur Vorderseite (33) hin abfallende Deckenwand (34) aufweist.

11. Vorrichtung nach Anspruch 9, **dadurch gekennzeichnet, daß** die nach oben ragenden Wandungsteile (39, 40) von Maschinenbett (1) und Schlitten (11) halbzylindrische Außenflächen aufweisen.

## Claims

1. Apparatus for butt-welding of thermoplastic pipes, in particular as a table apparatus for pipe diameters of up to 250 mm, comprising a machine bed (1) with a setting-up surface (2) and a first clamping surface (3) for atJeast one pipe holder (5) and with a first frontal linear guide (8) and arranged therebehind a second linear guide (9) for a carriage (11) having a second clamping surface (15) for at least one further pipe holder (17), and at least two coaxial pipe holders (5, 17) can be moved relative to each other by means of the carriage (11), with a planing tool (20) for the pipe ends, with a heating element (21) which is exchangeable with the planing tool (20) for plasticising of the pipe ends, and with a third linear guide (19) for permanent mounting, transverse displacement and pivotal movement of planing tool (20) and heating element (21), and the second linear guide (9) has a larger distance from the setting-up surface (2) of the machine bed (1) than the first frontal linear guide (8), **characterised in that** the machine bed (1) is mounted on a frame (51) so that it can be pivoted around a horizontal axis (A-A) and lowered to below a working level (E-E) which is determined in the operational position by the two linear guides (8, 9), and the frame (51) comprises two respective frontal supports (52) and two respective rear supports (53) which lie in a respective front and a rear main level (EV, EH) which extend parallel to the displacement directions of the pipe holders (5, 17), and the axis (A-A) is at least essentially arranged in the main plane (EH) of the rear supports (53).

2. Apparatus according to Claim 1, **characterised in that** two radial support arms (62. 63) protrude from the axis (A-A) onto which is mounted the machine bed (1) and which are provided with a respective springloaded bolt (64) by means of which the support arms (62, 63) are selectively connectable to the upper webs (60, 61) of the frame (51) and to the rear supports (53).

3. Apparatus according to Claim 1, **characterised in that** the frame (51) is at its one side provided with moving rollers (57) and at its other side with setting-up feet (58).

4. Apparatus according to Claim 1, **characterised in that** the frame (51) has in its lower area two horizontal webs (53, 54) on which is arranged a setting-down device (56) which interconnects the webs.

5. Apparatus according to Claim 1, **characterised in that** the height difference "H" between the first linear guide (8) and the second linear guide (9) lies between 10 and 100 mm.

6. Apparatus according to Claim 1, **characterised in that** the third linear guide (19) comprises for the planing tool (20) and the heating element (21) a smaller distance from the setting-up surface (2) than the second linear guide (9) for the pipe holders (5, 17).

7. Apparatus according to Claim 1, **characterised in that** the machine bed (1) comprises surfaces (37, 38) which extend in a downwardly sloping manner towards the operating side.

8. Apparatus according to Claim 7, **characterised in that** the sloping surfaces (37, 38) are designed to be upwardly curved.

9. Apparatus according to Claim 1, **characterised in that** the machine bed (1) and the carriage (11) are in the area of the second linear guide (9) provided with upwardly extending wall sections (39, 40) in which is mounted the second linear guide (9) which is designed as a guide rod.

10. Apparatus according to Claim 1, **characterised in that** the machine bed (1) comprises below the linear guides (8, 9) and the movement path of the carriage (11) a ceiling wall (34) which lowers relative to the side walls (7, 10) and descends towards the front side (33).

11. Apparatus according to Claim 9, **characterised in that** the upwardly extending wall sections (39, 40) of machine bed (1) and carriage (11) have semi-cylindrical outside surfaces.

## Revendications

1. Appareil pour le soudage bout à bout de tubes en matière thermoplastique, en particulier sous la forme d'un appareil d'établi pour des diamètres de tube allant jusqu'à 250 mm, comprenant un sommier de machine avec une surface de montage (2), et au moins une surface de serrage (3) pour au moins un porte-tube (5), et un premier guidage linéaire antérieur (8) et un deuxième de guidage linéaire (9) disposé derrière celui-ci pour un chariot (11), lequel comporte une deuxième surface de serrage (15) pour au moins un autre porte-tube (17), de sorte qu'au moins deux porte-tube coaxiaux (5, 17) sont susceptibles d'être déplacés l'un par rapport à l'autre au moyen du chariot (11), comprenant un outil de planage (20) pour les extrémités du tube, comprenant un élément chauffant ((21) interchangeable avec l'outil de planage (20) pour la mise à l'état plastique des extrémités du tube, et comprenant un troisième guidage linéaire (19) pour le montage permanent, le déplacement transversal, et le mouvement de basculement de l'outil de planage (20) et de l'élément chauffant (21), dans lequel le deuxième guidage linéaire (9) est situé à une distance plus grande de la surface de montage (2) du sommier de machine (1) que le premier guidage linéaire antérieur (8), **caractérisé en ce que** le sommier de machine (1) est monté sur un châssis (51) avec faculté de basculement autour d'un axe horizontal (A-A), et susceptible d'être abaissé au-dessous d'un plan de travail (E-E) qui est déterminé dans la position de fonctionnement par les deux guidages linéaires (8, 9), et **en ce que** le châssis (51) possède deux supports antérieurs (52) et deux supports postérieurs (53), qui sont disposés respectivement dans un plan principal antérieur et dans un plan principal postérieur (EV, EH), qui s'étendent parallèlement aux directions de déplacement des porte-tube (5, 17), et **en ce que** l'axe (A-A) est agencé au moins sensiblement dans le plan principal (EH) des supports postérieurs (53).

2. Appareil selon la revendication 1, **caractérisé en ce que** deux bras porteurs radiaux (62, 63) dépassent depuis l'axe (A-A), sur lesquels le sommier de machine (1) est fixé, et qui sont chacun doté d'un verrou (64) chargé par un ressort, au moyen duquel les bras porteurs (62, 63) peuvent être reliés au choix à des entretoises supérieures (60, 61) du châssis (51) et aux supports postérieurs (53).

3. Appareil selon la revendication 1, **caractérisé en ce que** le châssis (51) est pourvu sur un de ses côtés de galets de déplacement (57), et sur son autre côté de pieds de soutien (58).

4. Appareil selon la revendication 1, **caractérisé en ce que** le châssis (51) possède dans sa région inférieure deux entretoises horizontales (53, 54) sur lesquelles est agencé un dispositif de déposition (56) qui relie les entretoises.

5. Appareil selon la revendication 1, **caractérisé en ce que** la différence de hauteur "H" entre le premier guidage linéaire (8) et le deuxième guidage linéaire (9) est comprise entre 10 et 100 mm.

6. Appareil selon la revendication 1, **caractérisé en ce que** le troisième guidage linéaire (19) pour l'outil de planage (20) et l'élément chauffant (21) présente une distance depuis la surface de montage (2) qui est plus faible que celle du deuxième guidage linéaire (9) pour les porte-tube (5, 17).

7. Appareil selon la revendication 1, **caractérisé en ce que** le sommier de machine (1) présente des surfaces (37, 38) qui s'étendent en descendant vers le côté de service.

8. Appareil selon la revendication 7, **caractérisé en ce que** les surfaces descendantes (37, 38) sont réalisées sous forme bombée en direction du haut.

9. Appareil selon la revendication 1, **caractérisé en ce que** le sommier de machine (1) et le chariot (11) sont pourvus, dans la région du deuxième guidage linéaire (9), de parties de parois (39, 40) en saillie vers le haut, dans lesquelles est monté le deuxième guidage linéaire (9), réalisé sous la forme d'une tige de guidage.

10. Appareil selon la revendication 1, **caractérisé en ce que** le sommier de machine (1) présente, au-dessous des guidages linéaires (8, 9) et de la voie de déplacement du chariot (11), une paroi de couvercle (34) en renfoncement par rapport aux parois latérales (7, 10) et descendant en direction du côté antérieur (33).

11. Appareil selon la revendication 9, **caractérisé en ce que** les parties de parois (39, 40) en saillie vers le haut du sommier de machine (1) et du chariot (11) présentent des surfaces extérieures demi-cylindriques.
